# EUROPEAN PATENT APPLICATION

(11) **EP 3 073 798 A1**
(43) Date of publication of application: **28.09.2016**
(21) Application number: 13887590.1
(22) Date of filing: 22.11.2013
(51) Int. Cl.: H04W 88/02, H04N 5/232

(54) **METHOD AND MOBILE PHONE DEVICE FOR REALIZING DIGITAL MAGNIFIER**

(71) Applicant: Huawei Device Co., Ltd., Longgang District Shenzhen Guangdong 518129 (CN)
(72) Inventor: WANG, Xiuwen, Shenzhen Guangdong 518129 (CN); YU, Xiaobo, Shenzhen Guangdong 518129 (CN)
(74) Representative: Thun, Clemens
(86) International application number: PCT/CN2013/087713
(87) International publication number: WO 2015/074257

(57) **Abstract**

A method and mobile phone device for implementing a digital magnifying glass are provided. The method includes: detecting, by a mobile phone device, a camera starting instruction input by a user; responding to, by the mobile phone device, the camera starting instruction and starting a camera to perform object previewing; and adjusting, by the mobile phone device, a current camera focal length of the camera to a shortest camera focal length supported by the camera. By implementing the embodiments of the present invention, accurate focusing can be implemented in a process of bringing the camera of the mobile phone device close to an object to obtain an effect of magnifying the previewed object, thereby obtaining a clear object previewing picture.

## Description

### TECHNICAL FIELD

The present invention relates to the field of communications technologies, and in particular, to a method and mobile phone device for implementing a digital magnifying glass.

### BACKGROUND

It's generally known that, with the development of smartphones (such as Android mobile phones and iOS mobile phones), a camera has become an indispensable standard configuration of a smartphone. By using this standard configuration of a smartphone, many smartphones can implement a function of a digital magnifying glass to meet an urgent need of a poor-eyesight person (such as a senior citizen) for reading a book and reading a newspaper. A process of implementing a digital magnifying glass on a smartphone is as follows: starting a camera of the smartphone to perform previewing and then bringing the camera of the smartphone close to an object, so as to achieve an effect of magnifying the previewed object.

In the foregoing process of implementing the digital magnifying glass, accurate focusing cannot be implemented in a process of bringing the camera of the smartphone close to an object to obtain an effect of magnifying the previewed object, and as a result, no clear object previewing picture can be obtained.

### SUMMARY

Embodiments of the present invention disclose a method and mobile phone device for implementing a digital magnifying glass, so as to resolve a problem that accurate focusing cannot be implemented in a process of bringing a camera of a smartphone close to an object to obtain an effect of magnifying the previewed object, and as a result, no clear object previewing picture can be obtained.

According to a first aspect, an embodiment of the present invention discloses a method for implementing a digital magnifying glass, where the method includes:
detecting, by a mobile phone device, a camera starting instruction input by a user;
responding to, by the mobile phone device, the camera starting instruction and starting a camera to perform object previewing; and
adjusting, by the mobile phone device, a current camera focal length of the camera to a shortest camera focal length supported by the camera, where
the adjusting, by the mobile phone device, a current camera focal length of the camera to a shortest camera focal length supported by the camera includes:
regulating, by the mobile phone device, a lens position in a camera module by controlling a focus motor included by the camera, so as to adjust the current camera focal length of the camera to the shortest camera focal length supported by the camera.

In a first possible implementation manner of the first aspect of the embodiment of the present invention, after the responding to, by the mobile phone device, the camera starting instruction and starting a camera to perform object previewing and before the adjusting, by the mobile phone device, a current camera focal length of the camera to a shortest camera focal length supported by the camera, the method further includes:
outputting, by the mobile phone device, prompt information, where the prompt information is used for prompting whether to enable a digital magnifying glass function;
detecting, by the mobile phone device, whether a digital magnifying glass starting instruction input by the user for the prompt information is received; and
if the digital magnifying glass starting instruction input by the user for the prompt information is received, executing, by the mobile phone device, the step of adjusting the current camera focal length of the camera to the shortest camera focal length supported by the camera.

In a second possible implementation manner of the first aspect of the embodiment of the present invention, after the adjusting, by the mobile phone device, a current camera focal length of the camera to a shortest camera focal length supported by the camera, the method further includes:
detecting, by the mobile phone device, a camera focal length increasing instruction input by the user; and
responding to, by the mobile phone device, the camera focal length increasing instruction to increase the current camera focal length of the camera.

With reference to the second possible implementation manner of the first aspect of the embodiment of the present invention, in a third possible implementation manner of the first aspect of the embodiment of the present invention, the detecting, by the mobile phone device, a camera focal length increasing instruction input by the user includes:
detecting, by the mobile phone device, the camera focal length increasing instruction input by the user by performing an operation on an object previewing screen; or
detecting, by the mobile phone device, the camera focal length increasing instruction input by the user by performing an operation on a volume rocker.

With reference to the first aspect of the embodiment of the present invention or any one of the first to third possible implementation manners of the first aspect of the embodiment of the present invention, in a fourth possible implementation manner of the first aspect of the embodiment of the present invention, after the responding to, by the mobile phone device, the camera starting instruction and starting a camera to perform object previewing, the method further includes:
adjusting, by the mobile phone device, a current frame rate of the camera to a maximum frame rate supported by the camera.

According to a second aspect, an embodiment of the present invention discloses a computer storage medium, where the computer storage medium stores a program, where all the steps of the method for implementing a digital magnifying glass disclosed in the first aspect of the embodiment of the present invention are included when the program is executed.

According to a third aspect, an embodiment of the present invention discloses a mobile phone device, where the mobile phone device includes:
a detecting unit, configured to detect a camera starting instruction input by a user;
a starting unit, configured to respond to the camera starting instruction detected by the detecting unit and start a camera to perform object previewing; and
a focal length adjusting unit, configured to respond to the camera starting instruction detected by the detecting unit and adjust a current camera focal length of the camera to a shortest camera focal length supported by the camera.

In a first possible implementation manner of the third aspect of the embodiment of the present invention, the mobile phone device further includes:
an outputting unit, configured to: after the starting unit responds to the camera starting instruction detected by the detecting unit and starts the camera to perform object previewing, output prompt information, where the prompt information is used for prompting whether to enable a digital magnifying glass function; and
the detecting unit is further configured to: detect whether a digital magnifying glass starting instruction input by the user for the prompt information is received; and if the digital magnifying glass starting instruction input by the user for the prompt information is received, trigger the focal length adjusting unit to execute the step of responding to the camera starting instruction detected by the detecting unit and adjusting a current camera focal length of the camera to a shortest camera focal length supported by the camera.

In a second possible implementation manner of the third aspect of the embodiment of the present invention,
the detecting unit is further configured to: after the adjusting unit adjusts the current camera focal length of the camera to the shortest camera focal length supported by the camera, detect a camera focal length increasing instruction input by the user; and
the focal length adjusting unit is further configured to respond to the camera focal length increasing instruction detected by the detecting unit to increase the current camera focal length of the camera.

With reference to the second possible implementation manner of the third aspect of the embodiment of the present invention, in a third possible implementation manner of the third aspect of the embodiment of the present invention, a manner of detecting, by the detecting unit, the camera focal length increasing instruction input by the user is specifically:
the detecting unit is configured to detect the camera focal length increasing instruction input by the user by performing an operation on an object previewing screen; or
detect the camera focal length increasing instruction input by the user by performing an operation on a volume rocker.

With reference to the third aspect of the embodiment of the present invention or any one of the first to third possible implementation manners of the third aspect of the embodiment of the present invention, in a fourth possible implementation manner of the third aspect of the embodiment of the present invention, the mobile phone device further includes:
a frame rate adjusting unit, configured to: after the starting unit responds to the camera starting instruction detected by the detecting unit and starts the camera to perform object previewing, adjust a current frame rate of the camera to a maximum frame rate supported by the camera.

According to a fourth aspect, an embodiment of the present invention discloses a mobile phone device, where the mobile phone device includes: a processor; a display screen, a microphone, a camera, and a loudspeaker that are connected to the processor by using a user interface; a memory that is connected to the processor by using a bus; a coupler that is connected to the processor by using multiple types of network interfaces; and an antenna connected to the coupler; where the memory stores a group of program code and the processor is configured to call the program code stored in the memory to execute the following operations:
detecting a camera starting instruction input by a user;
responding to the camera starting instruction and starting the camera to perform object previewing; and
adjusting a current camera focal length of the camera to a shortest camera focal length supported by the camera.

In a first possible implementation manner of the fourth aspect of the embodiment of the present invention, after responding to the camera starting instruction and starting the camera to perform object previewing and before adjusting the current camera focal length of the camera to the shortest camera focal length supported by the camera, the processor further executes the following operations:
outputting prompt information, where the prompt information is used for prompting whether to enable a digital magnifying glass function;
detecting whether a digital magnifying glass starting instruction input by the user for the prompt information is received; and
if the digital magnifying glass starting instruction input by the user for the prompt information is received, executing the step of adjusting a current camera focal length of the camera to a shortest camera focal length supported by the camera.

In a second possible implementation manner of the fourth aspect of the embodiment of the present invention, after adjusting the current camera focal length of the camera to the shortest camera focal length supported by the camera, the processor further executes the following operations:
detecting a camera focal length increasing instruction input by the user; and
responding to the camera focal length increasing instruction to increase the current camera focal length of the camera.

With reference to the second possible implementation manner of the fourth aspect of the embodiment of the present invention, in a third possible implementation manner of the fourth aspect of the embodiment of the present invention, a manner of detecting, by the processor, the camera focal length increasing instruction input by the user is specifically:
detecting the camera focal length increasing instruction input by the user by performing an operation on an object previewing screen; or
detecting the camera focal length increasing instruction input by the user by performing an operation on a volume rocker.

With reference to the fourth aspect of the embodiment of the present invention or any one of the first to third possible implementation manners of the fourth aspect of the embodiment of the present invention, in a fourth possible implementation manner of the fourth aspect of the embodiment of the present invention, after responding to the camera starting instruction and starting the camera to perform object previewing, the processor further executes the following operation, including:
adjusting a current frame rate of the camera to a maximum frame rate supported by the camera.

In the embodiments of the present invention, after detecting a camera starting instruction input by a user, a mobile phone device can start a camera to perform object previewing and can adjust a current camera focal length of the camera to a shortest camera focal length supported by the camera. In this way, it can be ensured that no focal length change occurs in a process of bringing the camera of the mobile phone device close to an object to obtain an effect of magnifying the previewed object; and in this case, a fixed focal length of a real magnifying glass can be simulated, so as to implement accurate focusing in the process of bringing the camera of the mobile phone device close to an object to obtain an effect of magnifying the previewed object, and obtain a clear object previewing picture.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for implementing a digital magnifying glass disclosed in an embodiment of the present invention;
FIG. 2 is a schematic flowchart of another method for implementing a digital magnifying glass disclosed in an embodiment of the present invention;
FIG. 3 is a schematic diagram of a prompt information screen output by a mobile phone device disclosed in an embodiment of the present invention;
FIG. 4 is a schematic diagram of a digital magnifying glass screen output by a mobile phone device disclosed in an embodiment of the present invention;
FIG. 5 is a schematic structural diagram of a mobile phone device disclosed in an embodiment of the present invention; and
FIG. 6 is a schematic structural diagram of another mobile phone device disclosed in an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

Embodiments of the present invention disclose a method and mobile phone device for implementing a digital magnifying glass, which can implement accurate focusing in a process of bringing a camera of a mobile phone device close to an object to obtain an effect of magnifying the photographed object, and therefore can obtain a clear photographed object picture. The following separately provides detailed description.

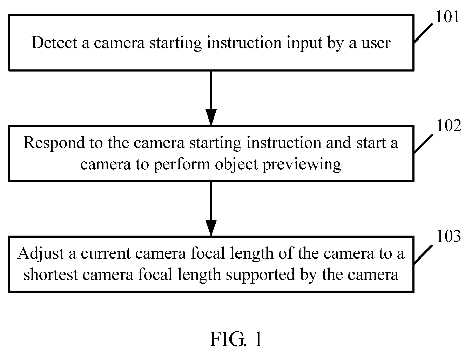

Refer to FIG. 1. FIG. 1 is a schematic flowchart of a method for implementing a digital magnifying glass disclosed in an embodiment of the present invention. The method for implementing a digital magnifying glass shown in FIG. 1 may include the following steps:
101: Detect a camera starting instruction input by a user.

In this embodiment of the present invention, a mobile phone device may be used for detecting the camera starting instruction input by the user. The mobile phone device may include a mobile phone device having a camera, for example, a smartphone (such as an Android mobile phone or an iOS mobile phone), and may also include a terminal device having a camera, such as a tablet computer, a personal digital assistant (Personal Digital Assistant, PDA), or a mobile Internet device (Mobile Internet Devices, MID). In this embodiment of the present invention, a mobile phone device may include at least one processor and a terminal device may work under control of the at least one processor.

In an embodiment, the user may perform a click operation on a camera application on an application program display screen of the mobile phone device to input the camera starting instruction, so that the mobile phone device can detect the camera starting instruction input by the user.

In another embodiment, the user may also perform a pressing operation on a physical button configured for the mobile phone device to input the camera starting instruction, so that the mobile phone device can detect the camera starting instruction input by the user.
102: Respond to the camera starting instruction and start a camera to perform object previewing.

In this embodiment of the present invention, the mobile phone device may be used for responding to the camera starting instruction and starting the camera to perform object previewing. When the camera performs object previewing, an object previewing picture is displayed on a display screen of the terminal device.

103: Adjust a current camera focal length of the camera to a shortest camera focal length supported by the camera.

In this embodiment of the present invention, the mobile phone device may be used for adjusting the current camera focal length of the camera to the shortest camera focal length supported by the camera. For example, the shortest camera focal length supported by the camera refers to a shortest camera focal length supported by camera hardware, for example, a shortest camera focal length supported by common camera hardware may be 3cm-8cm.

In this embodiment of the present invention, the camera focal length is a very important indicator of a camera. A length of a camera focal length determines a size of an object previewing picture, that is, the length of a camera focal length is equivalent to a scale of an object and a picture. When a same object is previewed, an object previewing picture is large when a camera focal length of a camera is short, and an object previewing picture is small when a camera focal length of a camera is long.

In this embodiment of the present invention, the camera may include a focus motor. In this way, the mobile phone device can adjust a lens position in a camera module by controlling the focus motor, so as to achieve a purpose of adjusting the current camera focal length of the camera to the shortest camera focal length supported by the camera.

In the method described in FIG. 1, after detecting a camera starting instruction input by a user, a mobile phone device can start a camera to perform object previewing and can adjust a current camera focal length of the camera to a shortest camera focal length supported by the camera. In this way, it can be ensured that no focal length change occurs in a process of bringing the camera of the mobile phone device close to an object to obtain an effect of magnifying the previewed object; and in this case, a fixed focal length of a real magnifying glass can be simulated, so as to implement accurate focusing in the process of bringing the camera of the mobile phone device close to an object to obtain an effect of magnifying the previewed object, and obtain a clear object previewing picture.

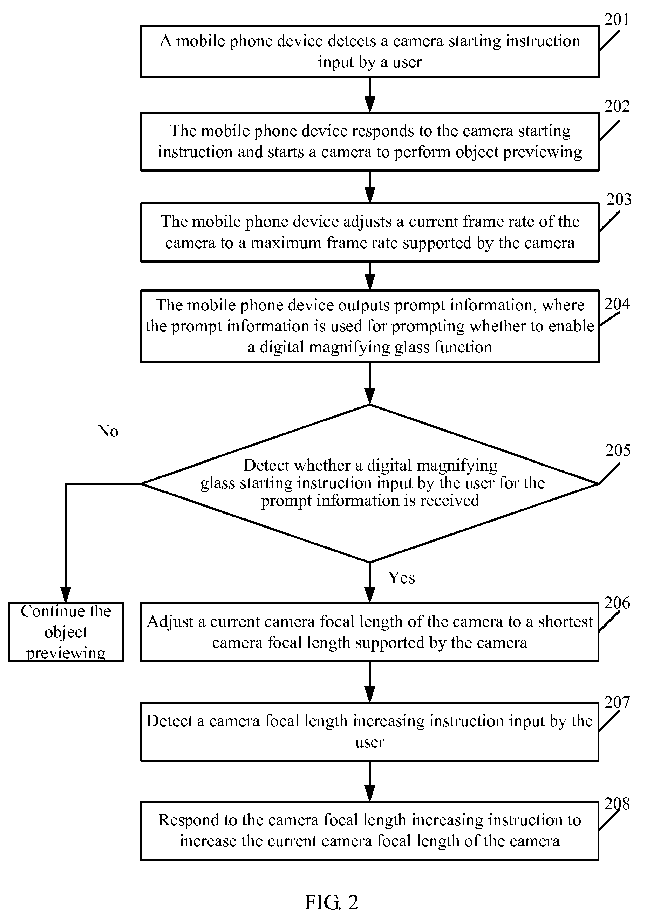

Refer to FIG. 2. FIG. 2 is a schematic flowchart of another method for implementing a digital magnifying glass disclosed in an embodiment of the present invention. The method for implementing a digital magnifying glass shown in FIG. 2 is applicable to a smartphone having a camera (such as an Android mobile phone or an iOS mobile phone). The method for implementing a digital magnifying glass shown in FIG. 2 may include the following steps:
201: A mobile phone device detects a camera starting instruction input by a user.

In an embodiment, the user may perform a click operation on a camera application on an application program display screen of the mobile phone device to input the camera starting instruction, so that the mobile phone device can detect the camera starting instruction input by the user.

In another embodiment, the user may also perform a pressing operation on a physical button configured for the mobile phone device to input the camera starting instruction, so that the mobile phone device can detect the camera starting instruction input by the user.
202: The mobile phone device responds to the camera starting instruction and starts a camera to perform object previewing.

In this embodiment of the present invention, the mobile phone device may be used for responding to the camera starting instruction and starting the camera to perform object previewing. When the camera performs object previewing, an object previewing picture is displayed on a display screen of a terminal device.
203: The mobile phone device adjusts a current frame rate of the camera to a maximum frame rate supported by the camera.

In this embodiment of the present invention, the frame rate is also known as FPS (Frames Per Second), indicating the number of frames of an object picture previewed by a camera per second. After the mobile phone device adjusts the current frame rate of the camera to the maximum frame rate supported by the camera, an object picture that is more stable and smoother can be output, which can effectively reduce visual fatigue caused by a current low frame rate of the camera.

In this embodiment of the present invention, the maximum frame rate supported by the camera may be more than 60FPS.
204: The mobile phone device outputs prompt information, where the prompt information is used for prompting whether to enable a digital magnifying glass function.

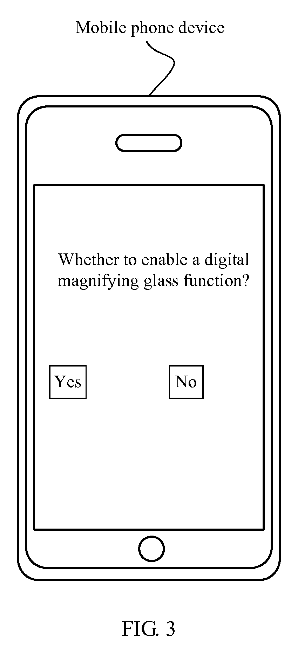

In this embodiment of the present invention, as shown in FIG. 3, the mobile phone device can output prompt information "whether to enable a digital magnifying glass function? Yes/No", which is used for prompting whether to enable the digital magnifying glass function.
205: The mobile phone device detects whether a digital magnifying glass starting instruction input by the user for the prompt information is received. If yes, step 206 is executed; and if no, the object previewing continues.

In this embodiment of the present invention, the user may select "Yes" for the prompt information output by the mobile phone device, and therefore, the digital magnifying glass starting instruction input for the prompt information can be input to the mobile phone device.
206: If the digital magnifying glass starting instruction input by the user for the prompt information is received, the mobile phone device adjusts a current camera focal length of the camera to a shortest camera focal length supported by the camera.

In this embodiment of the present invention, for example, the shortest camera focal length supported by the camera may be 3cm-8cm.

In this embodiment of the present invention, the camera focal length is a very important indicator of a camera. A length of a camera focal length determines a size of an object previewing picture, that is, the length of a camera focal length is equivalent to a scale of an object and a picture. When a same object is previewed, an object previewing picture is large when a camera focal length of a camera is short, and an object previewing picture is small when a camera focal length of a camera is long.

In this embodiment of the present invention, the mobile phone device adjusts the current camera focal length of the camera to the shortest camera focal length supported by the camera. In this way, it can be ensured that no focal length change occurs in a process of bringing the camera of the mobile phone device close to an object to obtain an effect of magnifying the previewed object; and in this case, a fixed focal length of a real magnifying glass can be simulated, so as to implement accurate focusing in the process of bringing the camera of the mobile phone device close to an object to obtain an effect of magnifying the previewed object, and obtain a clear object previewing picture.

In this embodiment of the present invention, the camera may include a focus motor. In this way, the mobile phone device can adjust a lens position in a camera module by controlling the focus motor, so as to achieve a purpose of adjusting the current camera focal length of the camera to the shortest camera focal length supported by the camera.
207: The mobile phone device detects a camera focal length increasing instruction input by the user.

In this embodiment of the present invention, the mobile phone device can detect the camera focal length increasing instruction input by the user by performing an operation on an object previewing screen; or the mobile phone device can detect the camera focal length increasing instruction input by the user by performing an operation on a volume rocker.

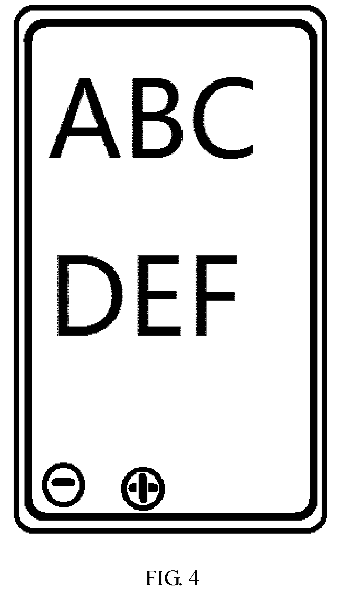

For example, as shown in FIG. 4, virtual buttons "-" and "+" that are used for adjusting the camera focal length may be set on the object previewing screen of the mobile phone device. In this way, when the user clicks the virtual button "+", used for adjusting the camera focal length, on the object previewing screen of the mobile phone device, the mobile phone device can detect the camera focal length increasing instruction input by the user.
208: The mobile phone device responds to the camera focal length increasing instruction to increase the current camera focal length of the camera.

In this embodiment of the present invention, by executing the foregoing steps 207 to 208, the mobile phone device allows the user to manually adjust the camera focal length within a certain range to enable the user to always see, within a certain range, a clear object previewing picture.

In this embodiment of the present invention, the foregoing step 203 may also be located in any position in steps 204 to 208, which does not affect implementation of this embodiment of the present invention and is not limited in this embodiment of the present invention.

In the method described in FIG. 2, a mobile phone device adjusts a current camera focal length of a camera to a shortest camera focal length supported by the camera. In this way, it can be ensured that no focal length change occurs in a process of bringing the camera of the mobile phone device close to an object to obtain an effect of magnifying the previewed object; and in this case, a fixed focal length of a real magnifying glass can be simulated, so as to implement accurate focusing in the process of bringing the camera of the mobile phone device close to an object to obtain an effect of magnifying the previewed object, and obtain a clear object previewing picture.

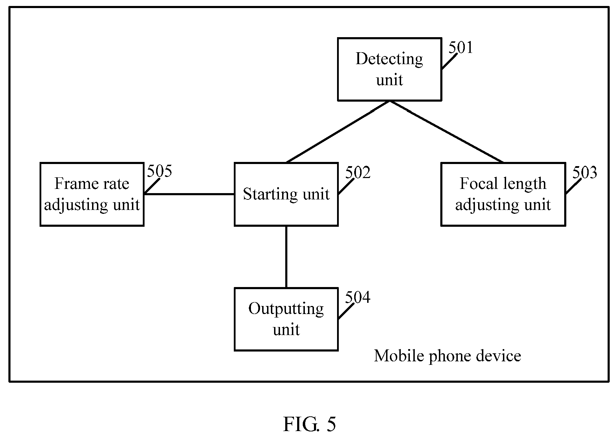

Refer to FIG. 5. FIG. 5 is a schematic structural diagram of a mobile phone device disclosed in an embodiment of the present invention. The mobile phone device shown in FIG. 5 may include:
a detecting unit 501, configured to detect a camera starting instruction input by a user;
a starting unit 502, configured to respond to the camera starting instruction detected by the detecting unit 501 and start a camera to perform object previewing; and
a focal length adjusting unit 503, configured to respond to the camera starting instruction detected by the detecting unit 501 and adjust a current camera focal length of the camera to a shortest camera focal length supported by the camera.

In an implementation manner, the mobile phone device shown in FIG. 5 may further include:
an outputting unit 504, configured to: after the starting unit 502 responds to the camera starting instruction detected by the detecting unit 501 and starts the camera to perform object previewing, output prompt information, where the prompt information is used for prompting whether to enable a digital magnifying glass function (as shown in FIG. 3).

Accordingly, the detecting unit 501 is further configured to: detect whether a digital magnifying glass starting instruction input by the user for the prompt information is received; and if the digital magnifying glass starting instruction input by the user for the prompt information is received, trigger the focal length adjusting unit 503 to execute the step of responding to the camera starting instruction detected by the detecting unit 501 and adjusting a current camera focal length of the camera to a shortest camera focal length supported by the camera.

In another implementation manner, in the mobile phone device shown in FIG. 5:
the detecting unit 501 is further configured to: after the focal length adjusting unit 503 adjusts the current camera focal length of the camera to the shortest camera focal length supported by the camera, detect a camera focal length increasing instruction input by the user; and
accordingly, the focal length adjusting unit 503 is further configured to respond to the camera focal length increasing instruction detected by the detecting unit 501 to increase the current camera focal length of the camera.

In this manner, it can be implemented that the user is allowed to manually adjust the camera focal length within a certain range to enable the user to always see, within a certain range, a clear object previewing picture.

In this embodiment of the present invention, a manner of detecting, by the detecting unit 501, the camera focal length increasing instruction input by the user is specifically:
the detecting unit 501 is configured to detect the camera focal length increasing instruction input by the user by performing an operation on an object previewing screen; or
detect the camera focal length increasing instruction input by the user by performing an operation on a volume rocker.

In still another implementation manner, the mobile phone device shown in FIG. 5 may further include:
a frame rate adjusting unit 505, configured to: after the starting unit 502 responds to the camera starting instruction detected by the detecting unit 501 and starts the camera to perform object previewing, adjust a current frame rate of the camera to a maximum frame rate supported by the camera. Therefore, a terminal device can output an object picture that is more stable and smoother, which can effectively reduce visual fatigue caused by a current low frame rate of the camera.

In the mobile phone device described in FIG. 5, a current camera focal length of a camera is adjusted to a shortest camera focal length supported by the camera. In this way, it can be ensured that no focal length change occurs in a process of bringing the camera of the mobile phone device close to an object to obtain an effect of magnifying the previewed object; and in this case, a fixed focal length of a real magnifying glass can be simulated, so as to implement accurate focusing in the process of bringing the camera of the mobile phone device close to an object to obtain an effect of magnifying the previewed object, and obtain a clear object previewing picture.

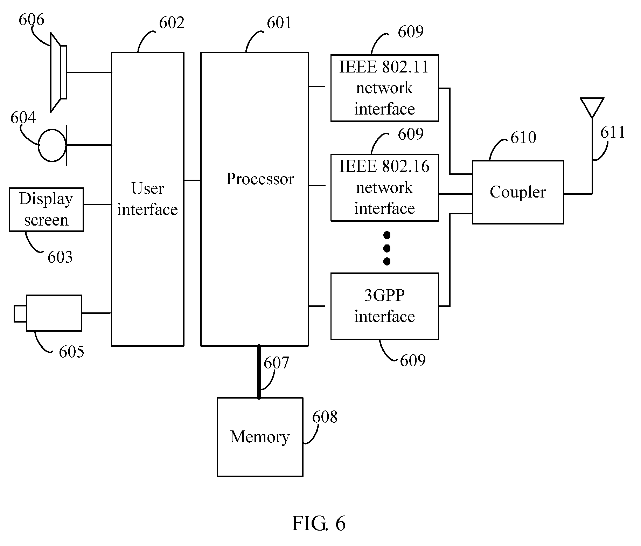

Refer to FIG. 6. FIG. 6 is a schematic structural diagram of a mobile phone device disclosed in an embodiment of the present invention. The mobile phone device shown in FIG. 6 may include:
a processor 601; a display screen 603, a microphone 604, a camera 605, and loudspeaker 606 that are connected to the processor 601 by using a user interface 602; a memory 608 that is connected to the processor 601 by using a bus 607; a coupler 610 that is connected by using multiple types of network interfaces 609; and an antenna 611 connected to the coupler 610. The multiple types of network interfaces 609 may include several network interfaces of different systems, such as an IEEE 802.11 network interface, an IEEE 802.16 network interface, and a 3GPP network interface, which is not limited in the embodiment of the present invention. Outputs of the IEEE 802.11 network interface, the IEEE 802.16 network interface, and the 3GPP network interface are coupled to the antenna 611 through the coupler 610 for emission. The loudspeaker 606 is configured to output an audio file. The microphone 604 is configured to record an audio file. The display screen 603 is configured to output an object picture, an application program, information, a webpage, and the like that are previewed by the camera 605. The camera 605 is configured to preview an object. The memory 608 is configured to store a group of program code. The processor 601 is configured to call the program code stored in the memory 608 to execute the following operations:
   detecting a camera starting instruction input (for example, input by using the display screen 603) by a user;
   responding to the camera starting instruction and starting the camera to perform object previewing; and
   adjusting a current camera focal length of the camera to a shortest camera focal length supported by the camera.

In an implementation manner, after responding to the camera starting instruction and starting the camera to perform object previewing and before adjusting the current camera focal length of the camera to the shortest camera focal length supported by the camera, the processor 601 further executes the following operations:
outputting (for example, outputting by using the display screen 603) prompt information, where the prompt information is used for prompting whether to enable a digital magnifying glass function;
detecting whether a digital magnifying glass starting instruction input (for example, input by using the display screen 603) by the user for the prompt information is received; and
if the digital magnifying glass starting instruction input by the user for the prompt information is received, executing the step of adjusting a current camera focal length of the camera to a shortest camera focal length supported by the camera.

In an implementation manner, after adjusting the current camera focal length of the camera to the shortest camera focal length supported by the camera, the processor 601 further executes the following operations:
detecting a camera focal length increasing instruction input by the user; and
responding to the camera focal length increasing instruction to increase the current camera focal length of the camera.

In this manner, it can be implemented that the user is allowed to manually adjust the camera focal length within a certain range to enable the user to always see, within a certain range, a clear object previewing picture.

In an implementation manner, a manner of detecting, by the processor 601, the camera focal length increasing instruction input by the user is specifically:
detecting the camera focal length increasing instruction input by the user by performing an operation on an object previewing screen; or
detecting the camera focal length increasing instruction input by the user by performing an operation on a volume rocker.

In an implementation manner, after responding to the camera starting instruction and starting the camera to perform object previewing, the processor 601 further executes the following operation:
adjusting a current frame rate of the camera to a maximum frame rate supported by the camera.

The adjusting a current frame rate of the camera to a maximum frame rate (for example, 60FPS) supported by the camera can enable a terminal device to output an object picture that is more stable and smooth, so as to effectively reduce visual fatigue caused by a current low frame rate of the camera.

It should be noted that, in the mobile phone device shown in FIG. 6, only required components in the terminal device are shown, where the components are configured to execute the method for implementing a digital magnifying glass disclosed in this embodiment of the present invention. Other components that the mobile phone device can have, such as a physical button, a keyboard, a power source, and a housing are not shown in this embodiment of the present invention, because this does not affect implementation of this embodiment of the present invention. In addition, the user may also input the foregoing various different instructions to the terminal device by using a keyboard or a physical button.

In the mobile phone device described in FIG. 6, a current camera focal length of a camera is adjusted to a shortest camera focal length supported by the camera. In this way, it can be ensured that no focal length change occurs in a process of bringing the camera of the mobile phone device close to an object to obtain an effect of magnifying the previewed object; and in this case, a fixed focal length of a real magnifying glass can be simulated, so as to implement accurate focusing in the process of bringing the camera of the mobile phone device close to an object to obtain an effect of magnifying the previewed object, and obtain a clear object previewing picture.

A person of ordinary skill in the art may understand that all or a part of the steps of the method embodiments may be implemented by a program instructing related hardware of a terminal device. The program may be stored in a computer-readable storage medium. When the program runs, the steps of the method embodiments are performed. The foregoing storage medium includes: any medium that can store program code, such as a flash memory, a read-only memory (Read-Only Memory, ROM), a random access memory (Random Access Memory, RAM), a magnetic disk, or an optical disc.

The foregoing describes in detail a method and mobile phone device for implementing a digital magnifying glass, which are disclosed in the embodiments of the present invention. In this specification, specific examples are used to describe the principle and implementation manners of the present invention, and the description of the embodiments is only intended to help understand the method and core idea of the present invention. Meanwhile, a person of ordinary skill in the art may make, based on the idea of the present invention, modifications with respect to the specific implementation manners and the application scope. Therefore, the content of this specification shall not be construed as a limitation to the present invention.

## Claims

1. A method for implementing a digital magnifying glass, comprising:
detecting, by a mobile phone device, a camera starting instruction input by a user;
responding to, by the mobile phone device, the camera starting instruction and starting a camera to perform object previewing; and
adjusting, by the mobile phone device, a current camera focal length of the camera to a shortest camera focal length supported by the camera, wherein
the adjusting, by the mobile phone device, a current camera focal length of the camera to a shortest camera focal length supported by the camera comprises:
regulating, by the mobile phone device, a lens position in a camera module by controlling a focus motor comprised by the camera, so as to adjust the current camera focal length of the camera to the shortest camera focal length supported by the camera.

2. The method according to claim 1, wherein after the responding to, by the mobile phone device, the camera starting instruction and starting a camera to perform object previewing and before the adjusting, by the mobile phone device, a current camera focal length of the camera to a shortest camera focal length supported by the camera, the method further comprises:
outputting, by the mobile phone device, prompt information, wherein the prompt information is used for prompting whether to enable a digital magnifying glass function;
detecting, by the mobile phone device, whether a digital magnifying glass starting instruction input by the user for the prompt information is received; and
if the digital magnifying glass starting instruction input by the user for the prompt information is received, executing, by the mobile phone device, the step of adjusting the current camera focal length of the camera to the shortest camera focal length supported by the camera.

3. The method according to claim 1, wherein after the adjusting, by the mobile phone device, a current camera focal length of the camera to a shortest camera focal length supported by the camera, the method further comprises:
detecting, by the mobile phone device, a camera focal length increasing instruction input by the user; and
responding to, by the mobile phone device, the camera focal length increasing instruction to increase the current camera focal length of the camera.

4. The method according to claim 3, wherein the detecting, by the mobile phone device, a camera focal length increasing instruction input by the user comprises:
detecting, by the mobile phone device, the camera focal length increasing instruction input by the user by performing an operation on an object previewing screen; or
detecting, by the mobile phone device, the camera focal length increasing instruction input by the user by performing an operation on a volume rocker.

5. The method according to any one of claims 1 to 4, wherein after the responding to, by the mobile phone device, the camera starting instruction and starting a camera to perform object previewing, the method further comprises:
adjusting, by the mobile phone device, a current frame rate of the camera to a maximum frame rate supported by the camera.

6. A computer storage medium, wherein the computer storage medium stores a program, wherein the step according to any one of claims 1 to 5 is comprised when the program is executed.

7. A mobile phone device, comprising:
a detecting unit, configured to detect a camera starting instruction input by a user;
a starting unit, configured to respond to the camera starting instruction detected by the detecting unit and start a camera to perform object previewing; and
a focal length adjusting unit, configured to respond to the camera starting instruction detected by the detecting unit and adjust a current camera focal length of the camera to a shortest camera focal length supported by the camera, wherein
the adjusting a current camera focal length of the camera to a shortest camera focal length supported by the camera comprises:
regulating a lens position in a camera module by controlling a focus motor comprised by the camera, so as to adjust the current camera focal length of the camera to the shortest camera focal length supported by the camera.

8. The mobile phone device according to claim 7, wherein the apparatus further comprises:
an outputting unit, configured to: after the starting unit responds to the camera starting instruction detected by the detecting unit and starts the camera to perform object previewing, output prompt information, wherein the prompt information is used for prompting whether to enable a digital magnifying glass function; and
the detecting unit is further configured to: detect whether a digital magnifying glass starting instruction input by the user for the prompt information is received; and if the digital magnifying glass starting instruction input by the user for the prompt information is received, trigger the focal length adjusting unit to execute the step of responding to the camera starting instruction detected by the detecting unit and adjusting a current camera focal length of the camera to a shortest camera focal length supported by the camera.

9. The mobile phone device according to claim 7, wherein:
the detecting unit is further configured to: after the focal length adjusting unit adjusts the current camera focal length of the camera to the shortest camera focal length supported by the camera, detect a camera focal length increasing instruction input by the user; and
the focal length adjusting unit is further configured to respond to the camera focal length increasing instruction detected by the detecting unit to increase the current camera focal length of the camera.

10. The mobile phone device according to claim 9, wherein a manner of detecting, by the detecting unit, the camera focal length increasing instruction input by the user is specifically:
the detecting unit is configured to detect the camera focal length increasing instruction input by the user by performing an operation on an object previewing screen; or
detect the camera focal length increasing instruction input by the user by performing an operation on a volume rocker.

11. The mobile phone device according to any one of claims 7 to 10, wherein the apparatus further comprises:
a frame rate adjusting unit, configured to: after the starting unit responds to the camera starting instruction detected by the detecting unit and starts the camera to perform object previewing, adjust a current frame rate of the camera to a maximum frame rate supported by the camera.

12. A mobile phone device, comprising a processor; a display screen, a microphone, a camera, and a loudspeaker that are connected to the processor by using a user interface; a memory that is connected to the processor by using a bus; a coupler that is connected to the processor by using multiple types of network interfaces; and an antenna connected to the coupler; wherein the memory stores a group of program code and the processor is configured to call the program code stored in the memory to execute the following operations:
detecting a camera starting instruction input by a user;
responding to the camera starting instruction and starting the camera to perform object previewing; and
adjusting a current camera focal length of the camera to a shortest camera focal length supported by the camera, wherein
the adjusting a current camera focal length of the camera to a shortest camera focal length supported by the camera comprises:
regulating a lens position in a camera module by controlling a focus motor comprised by the camera, so as to adjust the current camera focal length of the camera to the shortest camera focal length supported by the camera.

13. The mobile phone device according to claim 12, wherein after responding to the camera starting instruction and starting the camera to perform object previewing and before adjusting the current camera focal length of the camera to the shortest camera focal length supported by the camera, the processor further executes the following operations:
outputting prompt information, wherein the prompt information is used for prompting whether to enable a digital magnifying glass function;
detecting whether a digital magnifying glass starting instruction input by the user for the prompt information is received; and
if the digital magnifying glass starting instruction input by the user for the prompt information is received, executing the step of adjusting a current camera focal length of the camera to a shortest camera focal length supported by the camera.

14. The mobile phone device according to claim 12, wherein after adjusting the current camera focal length of the camera to the shortest camera focal length supported by the camera, the processor further executes the following operations:
detecting a camera focal length increasing instruction input by the user; and
responding to the camera focal length increasing instruction to increase the current camera focal length of the camera.

15. The mobile phone device according to claim 14, wherein a manner of detecting, by the processor, the camera focal length increasing instruction input by the user is specifically:
detecting the camera focal length increasing instruction input by the user by performing an operation on an object previewing screen; or
detecting the camera focal length increasing instruction input by the user by performing an operation on a volume rocker.

16. The mobile phone device according to any one of claims 12 to 15, wherein after responding to the camera starting instruction and starting the camera to perform object previewing, the processor further executes the following operation:
adjusting a current frame rate of the camera to a maximum frame rate supported by the camera.
